# EUROPÄISCHE PATENTANMELDUNG

(11) **EP 0 978 963 A2**
(43) Veröffentlichungstag der Anmeldung: **09.02.2000**
(21) Anmeldenummer: 99113090.7
(22) Anmeldetag: 06.07.1999
(51) Int. Cl.: H04L 12/14

(54) **Verfahren und Vorrichtung zur automatischen Abrechnung von Benutzungsgebühren**

(30) Priorität: 06.08.1998 DE 19835626
(71) Anmelder: SIEMENS AKTIENGESELLSCHAFT, 80333 München (DE)
(72) Erfinder: Dittmann, Werner, 83544 Albaching (DE)

(57) **Zusammenfassung**

Die Erfindung betrifft ein Verfahren zur Abrechnung von Benutzungsgebühren in Kommunikations- und Datennetzen. Sie erweitert die bestehenden Mechanismen der Prepaid Card und Kreditkarten Verfahren sowie der Verfahren für den Internetzugang mit automatischen Routing-, Prüf- und Verbindungsfunktionen.

## Beschreibung

Die Erfindung betrifft ein Verfahren zur Abrechnung von Benutzungsgebühren in Kommunikations- und Datennetzen.

Für die Abrechnung von Benutzungsgebühren in Datennetzen, insbesondere im Internet, sind derzeit verschiedene Modelle bekannt:
- Mieten einer Standleitung oder Festanschluß. Dies geschieht etwa bei größeren Forschungseinrichtungen, die ohnehin eine hohe Übertragungskapazität benötigen. Da die ursprüngliche Verwendung dieser Netze sowieso auf den Forschungssektor angesiedelt war, sind in den benutzten Übertragungsprotokollen (TCP/IP) anfangs keine weiteren Vergebührungsmechanismen vorgesehen gewesen. Diese Methode ist für einen herkömmlichen Benutzer, der sich mit seinem PC von zuhause in ein Netz einwählen möchte, aber finanziell nicht erschwinglich.
- Bezahlen eines festen Betrags pro Zeitraum, Betrag für Nutzungsdauer (Z.B. pro Minute), Menge des erzeugten Datenverkehrs.
   Die verschiedenen Abrechnungsmodelle können auch kombiniert werden.
   Im Beispiel Internet-Benutzung verbindet sich der Benutzer mittels eines speziellen Protokolls zu einem Internet Service Provider ISP, der ihm den von ihm gewünschten Zugang zum Netz ermöglicht. Vor der Benutzung des Netzes muß sich der Benutzer authentifizieren.

Der zweite beschriebene Mechanismus beinhaltet mehrere Nachteile.
Zum ersten muß ein Benutzer sich vor der ersten Benutzung einen Anbieter ISP auswählen und sich bei diesem als Kunde anmelden und identifizieren. Zudem ist er danach an diesen ISP gebunden.
Die Überwachung und die Abrechnung der anfallenden Kosten wird immer schwieriger und aufwendiger. Der Benutzer erhält unter Umständen Rechnungen von mehreren Zugangsanbietern.

Während der Benutzung des Datennetzes können weiterhin Dienste in Anspruch genommen werden, die eine zusätzliche Vergebührung erfordern, die unabhängig von einer ersten Vergebührung des Telefonnetzes und der zweiten Vergebührung des Zugangsanbieters ist.

Aufgabe der Erfindung ist es, ein Verfahren und eine Vorrichtung für die automatische Vergebührung von Nutzungsgebühren in Kommunikations- und Datennetzen anzugeben, welche die oben genannten Nachteile vermeidet.

Diese Aufgabe wird gelöst durch ein Verfahren gemäß Anspruch 1 und eine Vorrichtung gemäß Anspruch 11.

Aus der herkömmlichen Telefonie sind bereits Lösungen bekannt, wie man ohne vorherige Anmeldung Zugang zu dem Datennetz erhält und dessen Dienste benutzen kann. Hierbei sind im wesentlichen 2 Verfahren üblich:
- Kreditkarte, ohne besondere Anmeldung:
   Diese Dienste belasten automatisch das Kreditkartenkonto des Benutzers. Dabei wird entweder die Kartennummer vom Benutzer eingegeben, oder mittels des Magnetstreifens oder ähnlicher Medien an das Endgerät übertragen.
   Es geschieht eine Bonitätsprüfung (ist die Karte gesperrt), die Abrechnung kann während des Gespräches oder nachträglich erfolgen.
- Prepaid Card:
   Dieses Verfahren ist besonders aktuell im Bereich der Mobilen Kommunikationsnetze. Ein weiteres Beispiel ist die Telefonkarte für die Benutzung von öffentlichen Telefonzellen. Ähnlich funktioniert die neue Geldkarte, dessen Chip immer wieder mit Geld 'aufgeladen' werden kann. Diese Karten haben alle gemeinsam, daß sie einen bestimmten Betrag 'wert' sind, welcher während der Dauer der Benutzung kontinuierlich reduziert wird. Sobald das Guthaben aufgebraucht wurde, ist keine weitere Benutzung der Dienste möglich. Auch hier ist es denkbar, daß keine physikalische 'Karte' existiert, sondern daß ein Konto eingerichtet wurde, auf dem ein Betrag hinterlegt wurde.

Eine Variante der Abrechnung über Kreditkarte besteht darin, daß die Kartennummer bereits für einen Kreditkartendienst (Credit Card Service) hinterlegt ist. Der Benutzer identifiziert sich gegenüber diesem Dienst durch Eingabe einer PIN. Für diese Variante ist eine Anmeldung bei dem Telefonetzbetreiber oder dem Betreiber des Kartendienstes notwendig. Eine gesonderte Anmeldung bei dem Zugangsanbieter des Datennetzes kann entfallen. Die Prüfung und Abrechnung erfolgt über die Kreditkarte wie oben beschrieben.

Mit der Erfindung wird die automatische Abbuchung von Internetgebühren über solche Kartendienste ermöglicht.
Dabei werden die bereits vorhandenen Möglichkeiten der Dienste zur vereinfachten Abrechnung, Bonitätsprüfung und das 'Nachladen' von Guthaben genutzt.
Der bereits bestehende Mechanismus des Internet-Zugangs mit den automatischen Prüf- und Verbindungsmechanismen wird verwendet.
Bei Gebühreninformationen kann es sich um verschiedene Informationen handelt: etwa nur die gültige Nummer einer Kreditkarte oder der noch zur Verfügung stehende Betrag. Weitere Gebühreninformationen sind denkbar.

Bei der erfindungsgemäßen Verwendung einer Kreditkarte (Gebühreninformation == Bonität) entfällt das vorherige Anmelden bei einem ISP. Nach Bedarf (welcher Dienst soll benutzt werden, wo befinde ich mich gerade) kann der ISP gewechselt werden. Grundgebühren können entfallen, es werden nur die tatsächlich benutzten Ressourcen verrechnet.

Durch das erfindungsgemäßen Verwendung einer Prepaid Card (Gebühreninformation == Betrag) kann der Benutzer sich vor bösen Überraschungen in seiner Internet-Abrechnung schützen. Sobald der von ihm eingezahlte Betrag 'verbraucht' ist, ist eine weitere Benutzung des Dienstes erst nach neuerlichem Einzahlen auf die Karte möglich.
Dadurch ist auch bei einer mißbräuchlichen Verwendung des Zugangs durch einen Unberechtigten durch die Karte der Schaden auf alle Fälle begrenzt.

Vorteilhafte Ausgestaltungen und Weiterbildungen sind in den Unteransprüchen angegeben.

Die Gebühreninstanz, auch Kartendienst genannt, ist eine von Zugangspunkten unabhängiger Netzknoten in diesem Netz. Die Verbindung zur Überprüfung der Gebührendaten kann dabei auf verschiedene Weise zustande kommen.
- Der Benutzer wählt die Gebühreninstanz selbständig an. Dies ist von Vorteil, wenn er zwischen verschiedenen Gebühreninstanzen wählen möchte, etwa verschiedene Kreditkarten verwendet.
- Der Benutzer wird automatisch zu einer Gebühreninstanz verbunden.
   Dies ist der für den Benutzer bequemere Weg, er muß sich keine Zugangsnummer zu einer Gebühreninstanz merken.

Nach dem Verbindungsaufbau kann die Gebühreninstanz anhand der ihr zur Verfügung stehenden Information verschiedene Prüfungen durchlaufen.
Eine einfachste Prüfung wäre die Bonität des Anrufenden, das heißt ob eine Berechtigung zur Benutzung vorliegt, da die anfallenden Kosten übernommen werden, oder nicht.

Diese Prüfung ist recht einfach durchzuführen, etwa anhand der übertragenen Kreditkartennummer, ob diese noch gültig ist oder etwa gesperrt, da sie verloren oder gestohlen wurde.

Eine weitergehende Überprüfung kann sich auf die zugelassene Benutzungsdauer beziehen, etwa bei einer Prepaid Card die noch vorhandene Geldmenge, oder eine vom Kunden selbst eingestellte Benutzungsdauer, mit der er die tägliche/wöchentliche (oder einen anderen Zeitraum betreffende) Benutzungsdauer vorher festgelegt hat.

In einer anderen Ausführungsform kann bei der Gebühreninformation auch weitergehende Information enthalten sein, welche die Zugangsberechtigung des Benutzers genauer beschreibt. Dabei können etwa spezielle Berechtigungen enthalten sein, für die Benutzung besonderer, zum Beispiel vom Netzzugangspunkt angebotener Dienste. Umgekehrt kann aber auch eine Sperrung enthalten sein, etwa für Dienste mit einer Altersbeschränkung, oder zusätzlicher Vergütungspflicht oder ähnlichem. Diese zusätzlichen Informationen werden dann nach erfolgreicher Prüfung bei dem Verbindungsaufbau dem Netzzugangspunkt mitgeteilt.

Eine weitere vorteilhafte Ausgestaltung der Erfindung ermöglicht es dem Benutzer des Netzzuganges über Prepaid oder Kredit-Karte, weitere Dienste in Anspruch zu nehmen, die selber nochmals kostenpflichtig sind. Dabei kann es sich etwa um spezielle Informationsdienste handeln (das Recherchieren in Archiven, Lexikas wie Britannica Online oder ähnliches). Weiterhin kann auch die Bezahlung von, über das Netz bestellte, Waren und Dienstleistungen wesentlich vereinfacht werden. Hierbei ist momentan noch die getrennte Eingabe des Zahlungswunsches notwendig.

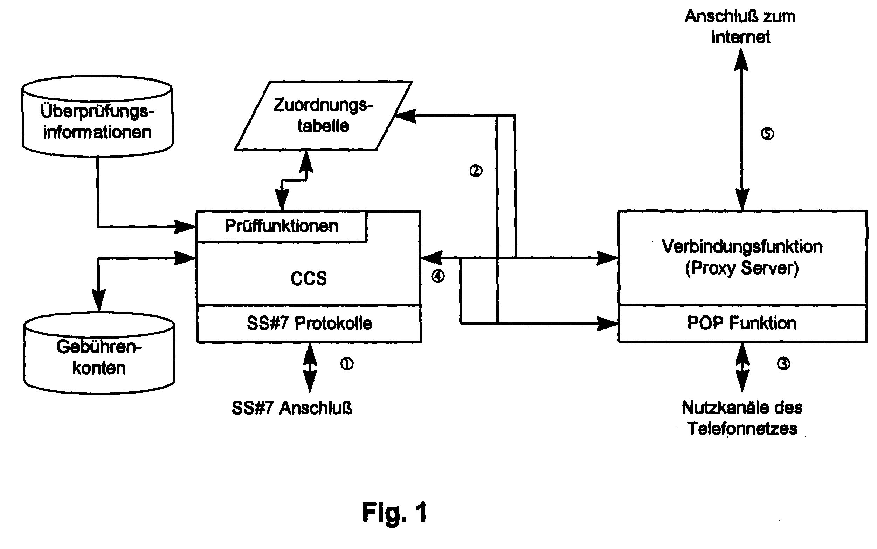

Im folgenden wird die Erfindung anhand von Ausführungsbeispielen erläutert. Dabei zeigt die Figur einen beispielhaften Aufbau der wesentlichen Netzelemente, welche für den Zugang mittels Prepaid Card benötigt werden. Weiterhin ist der Zeichnung die Art und Reihenfolge der Kommunikation zwischen den einzelnen Netzelementen zu entnehmen.

Bei dem dargestellten System handelt es sich nicht notwendigerweise um einem einzelnen Computer- oder Vermittlungssystem, sondern es kann sich aus mehreren Einzelsystemen zusammensetzen, die untereinander in geeigneter Weise verbunden sind, und auf denen die entsprechenden Funktionen ablaufen.

Der Ablauf der automatischen Abrechnung über Kartendienste wird im folgenden beschrieben. Als Beispiel dient ein Internet-Anschluss, der über eine reguläre Telefonverbindung mit SS #7 Signalisierung aufgebaut und genutzt wird. Andere Signalisierungsverfahren sind denkbar.

Zunächst wird vom Kunden zum Kartendienst (CCS) eine Verbindung aufgebaut. Dies initiiert entweder der Kunde, indem er den Kartendienst anwählt, oder durch automatisches Verbinden durch das Basisnetz (1). Diese Verbindung erfolgt über das Signalisierungsnetz SS#7.

Zu diesem Dienst werden dann Gebühreninformationen übertragen, welche den Kunden identifizieren können, und anhand derer die Gebühreninstanz (Prüffunktion) die Gebührenkonten (auf der Karte oder separat, anhand von zusätzlichen Überprü

fungsinformationen) überprüft.
Dabei kann die Prüfung beschränkt sein auf eine 'Sperrliste', welche nicht zugelassene Kunden enthält. Es können aber auch weitergehende Überprüfungen durchgeführt werden, etwa wie lange der Kunde zum Zugang berechtigt ist, etwa abhängig von der noch vorhandenen Geldmenge oder einer vom Kunden vorher selbst festgelegten Zeitdauer. Es kann auch zusätzliche Information weitergegeben werden, zu welchen Dienste später Zugang gewährt werden darf, etwa abhängig vom Alter oder nach einem vorher durchgeführten Anmeldevorgang.

Nach erfolgreicher Überprüfung kann dann der weitere Verbindungsaufbau durchgeführt werden.
Dafür werden die Identifikationsdaten zuerst in einer Zuordnungsliste eingetragen. Zusätzlich trägt die Überprüfungsfunktion noch weitere, für einen Verbindungsaufbau vom Benutzer zu dem zweiten Netz notwendigen, Daten in diese Tabelle ein.

Über diese Tabelle werden die Daten dann an den Netzzugangspunkt zu dem zweiten Netz übergeben. Dieser wird auch PoP (Point of Presence) genannt, und stellt den ursprünglichen, dem Fachmann bereits bekannten Zugangspunkt zu dem Internet dar. Dieser wird in der Regel von den Internet Service Providern (ISP) zur Verfügung gestellt.
Diese, dem Fachmann bereits bekannte, Technik kann bei der vorliegenden Erfindung weiter verwendet und ergänzt werden.

Nachdem in der Zuordnungstabelle die notwendigen Daten eingetragen wurden, bzw. wenn die entsprechenden Daten der POP-Funktion übergeben wurden (2), veranlaßt die Gebühreninstanz (CCS) über Funktionen des SS#7 Netzes, daß vom Benutzer ein Nutzkanal zur POP-Funktion geschaltet wird. Dabei ist anzumerken, daß auf dem Nutzungskanal ein anderes Protokoll zur Datenübertragung verwendet wird. Im Beispiel Internet handelt es sich z. B. um SLIP oder PPP vom Benutzer zum Internet Service Provider.

Wie bereits erwähnt, kann die POP-Funktion erhalten bleiben, sie muß lediglich um eine Meldefunktion erweitert werden. Die bestehenden Identifizierungs-, und Loginfunktionen sind gegebenenfalls zu erweitern..

Der von der Gebühreninstanz initiierte Nutzkanal wird von der POP-Funktion übernommen (3). Danach werden die vorher durch die Gebühreninstanz ermittelten Daten diesem Nutzkanal zugeordnet. Dieses geschieht entweder durch Zugriff auf die Zuordnungstabelle, oder die bereits vorher übermittelten Daten. Der Benutzer ist damit auch automatisch bereits beim ISP angemeldet.

Nach dem erfolgreichen Aufbau der Verbindung kann die POP-Funktion ermittelte Abrechnungsdaten an den Kartendienst übermitteln. Hierbei sind viele Vorgehensweisen denkbar, welche etwa vom Abrechnungs- oder Tarifmodell des Internet Service Providers abhängig sind. Die Abrechnungsdaten können etwa nach Abbau der Verbindung übermittelt werden, oder fortlaufend während der Verbindung. Dabei kann gegebenenfalls ein verbleibendes Guthaben und damit eine verbleibende Verbindungszeit errechnet werden. Weitere Vergebührungsmodelle wie die Gewährung von Rabatt bei längeren Verbindungszeiten sind denkbar.

Während der Verbindung mit dem POP sind für den Benutzer die eigentlichen Internetdienste (also der Zugang zu dem gewünschten zweiten Netz) möglich.
Die Benutzung erfolgt dabei üblicherweise über spezielle Verbindungsfunktionen, hier Proxy Server genannt. Diese übernehmen bekanntermaßen Kontroll- und Optimierungsfunktionen, wie z. B. Cache Mechanismen für WWW-Seiten.

Zusätzlich zu den herkömmlichen Benutzungsgebühren können beim 'Surfen' im Internet weitere Nutzungsgebühren anfallen. Dies ist etwa vorstellbar beim Recherchieren in Archiven oder Lexikas, beim Benutzen von Informationsdiensten aller Art, oder auch beim Herunterladen von (bewegte) Bilder, Text-, und Tondateien.

Weiterhin immer beliebter werden sogenannte Online-Shops, bei denen Waren bestellt werden können und deren Vergütung bislang über Kreditkarten geschieht. Dies ist allerdings recht unpraktisch, da trotz vielfältiger Verschlüsselungs- und Security Maßnahmen es immer noch bevorzugt wird, sicherheitskritische Informationen, wie eine Kreditkartennummer nicht über das Internet zu verschicken. So muß der Kunde, zumindest beim ersten Einkauf, wenn er einen 'Account', also ein Konto, einrichtet, eine mühsame Anmeldeprozedur durchlaufen. Dies gilt für jeden Online-Shop erneut.

Die anfallenden Nutzungsentgelte können bei der erfindungsgemäßen Lösung auf die Nutzungsgebühren geschlagen werden und zusammen mit diesen von der Karte bzw. vom Konto des Benutzers abgezogen werden. Die Weiterleitung der Gebühren kann von dem Kartendienst (CCS, auch durch Erzeugen von getrennten Gebühreninformationen für den Kartendienst) oder von der POP-Funktion übernommen werden.
Die Protokolle zur Übermittlung von Nutzungsentgelten zwischen den Internet-Diensten und der Verbindungsfunktion (bzw. POP-Funktion) sind nicht Gegenstand dieser Erfindung.

Bei der Bestellung von Waren kann sofort auf die gespeicherten Informationen (etwa in der Zuordnungstabelle) zugegriffen werden. Dabei wird im Falle einer Prepaid Card vor der Bestellung überprüft, ob das auf dem Konto vorhandene Geld noch zur Bezahlung der gewünschten Dienste oder Waren ausreicht. Fällt die Prüfung positiv aus, so kann die Bestellung zugelassen werden und der entsprechende Betrag wird sofort von der Karte/dem Konto abgebucht.

### Abkürzungsverzeichnis

- CCS: Credit Card Service
- IP: Internet Protocol
- ISP: Internet Service Provider
- POP: Point of Presence
- PPP: Point-to-point Protocol
- SLIP: Serial Line Interface Protocol
- SS#7: Signalling System Number 7
- TCP: Transport Control Protocol
- WWW: World Wide Web

## Patentansprüche

1. Verfahren zur automatischen Abrechnung von Benutzungsgebühren in Kommunikations- und Datennetzen, wobei
• von einem Endgerät eines Benutzers in einem ersten Kommunikationsnetz eine Verbindung über einen ersten Kanal (Signalisierung) zu einem Netzzugangspunkt zu einem zweiten Kommunikations- oder Datennetz aufgebaut wird, und
• bei diesem Netzzugangspunkt eine Identifikationsprozedur des Benutzers durchgeführt werden muß, bevor über eine Verbindungsfunktion ein zweiter Kanal geöffnet wird, über den Nutzdaten übertragen werden können, und
• für die Benutzung des ersten Kommunikationsnetzes eine erste Vergebührung erfolgt und
• für die Benutzung des zweiten Kommunikationsnetzes eine zweite, von der ersten unabhängige Vergebührung erfolgt,
wobei vor der Identifikationsprozedur wie folgt vorgegangen wird:
durch eine Gebühreninstanz
a)welche den Benutzer identifiziert, und
b)aufgrund von ihr zur Verfügung stehenden Gebühreninformationen die Zulässigkeit des Zugriffs vom Benutzer auf das zweite Kommunikationsnetz prüft, und
c)die nach einem positiven Ergebnis der Prüfung eine Verbindung zu dem Netzzugangspunkt zugeläßt.

2. Verfahren nach Patentanspruch 1,
dadurch gekennzeichnet, daß
zu der Gebühreninstanz eine Verbindung aufgebaut werden muß.

3. Verfahren nach Patentanspruch 1,
dadurch gekennzeichnet, daß
die Verbindung zu der Gebühreninstanz automatisch aufgebaut wird.

4. Verfahren nach Patentanspruch 1,
dadurch gekennzeichnet, daß
der Benutzer die Verbindung zur Gebühreninstanz durch Anwahl aufbaut.

5. Verfahren nach einem der vorigen Patentansprüche,
dadurch gekennzeichnet, daß
die Gebühreninstanz anhand der ihr zur Verfügung stehenden Informationen überprüft, ob der Benutzer der Verbindung für die weitergehende Benutzung zugelassen ist.

6. Verfahren nach einem der vorigen Patentansprüche,
dadurch gekennzeichnet, daß
die Gebühreninstanz anhand der ihr zur Verfügung stehenden Informationen überprüft, ob der Benutzer der Verbindung für die weitergehende Benutzung nicht zugelassen ist.

7. Verfahren nach einem der vorigen Patentansprüche,
dadurch gekennzeichnet, daß
die Gebühreninstanz anhand der ihr zur Verfügung stehenden Information überprüft, über welche Benutzungsberechtigungen der Benutzer verfügt.

8. Verfahren nach einem der vorigen Patentansprüche,
dadurch gekennzeichnet, daß
die Gebühreninstanz anhand der ihr zur Verfügung stehenden Gebühreninformation überprüft, wie lange der Benutzer das zweite Kommunikationsnetz über den Netzzugangspunkt benutzen darf.

9. Verfahren nach einem der vorigen Patentansprüche,
dadurch gekennzeichnet, daß
die Gebühreninstanz nach erfolgreich verlaufener Prüfung zusätzliche Informationen an den Netzzugangspunkt übergibt.

10. Verfahren nach einem der vorigen Patentansprüche,
dadurch gekennzeichnet, daß
dritte Benutzungsgebühren entstehen, während der Benutzung des zweiten Kommunikationsnetzes über den Netzzugangspunkt, und daß diese dritten Vergebührung auf die gleiche Art durch die Gebühreninstanz bei dem Benutzer durchgeführt wird, wie die zweite Vergebührung.

11. Vorrichtung zur automatischen Abrechnung von Benutzungsgebühren in Kommunikations- und Datennetzen, bestehend aus
• einer Gebühreninstanz, welche auf Mittel zur Speicherung von Gebühreninformationen zugreifen und diese mit Mitteln zur Überprüfung auswerten kann, sowie mit Mitteln zur Übertragung von Identifikations- und/oder Gebührendaten an
• einen Netzzugangspunkt, welcher Mittel zum Empfang und zur Verarbeitung von Identifikations- und/oder Gebührendaten enthält, sowie Mittel zum Aufbau einer Verbindung zwischen einem ersten Kommunikationsnetz und einem zweiten Kommunikationsnetz,
wobei dieser Verbindungsaufbau durch eine Verbindungsfunktion im Netzzugangspunkt von der Gebühreninstanz nur dann zugelassen oder veranlaßt wird, wenn von der Gebühreninstanz entsprechende Identifikations- und/oder Gebührendaten an den Netzzugangspunkt übermittelt werden.
